Europäisches Patentamt

European Patent Office

Office européen des brevets

(11) Veröffentlichungsnummer: **0 338 441**
**A2**

## (12) EUROPÄISCHE PATENTANMELDUNG

(21) Anmeldenummer: **89106668.0**

(22) Anmeldetag: **14.04.89**

(51) Int. Cl.⁴: **B60S 1/34**

(30) Priorität: **22.04.88 DE 8805394 U**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Karl Kässbohrer Fahrzeugwerke GmbH**
**Kässbohrerstrasse 13 Postfach 2660**
**D-7900 Ulm (Donau)(DE)**

(72) Erfinder: **Hagen, Hans, Dr.**
**Adalbertstrasse 10**
**D-8000 München 40(DE)**

(74) Vertreter: **Patentanwälte Grünecker,**
**Kinkeldey, Stockmair & Partner**
**Maximilianstrasse 58**
**D-8000 München 22(DE)**

(54) **Scheibenwischer.**

(57) Der Scheibenwischer verfügt über einen Wischblattträger, der mit einem angetriebenen, am Chassis verschwenkbar gelagerten Wischerarm und einem schwenkbaren Parallelogrammlenker gelenkig verbunden ist.

Der Scheibenwischer soll auch für stark gewölbte Scheiben ein großes Wischerfeld bieten, ohne daß der Wischblattträger in einer Ruheposition die Sicht des Fahrers stört.

Hierzu wird der Lenker an einem Hebel gelagert, der seinerseits am Chassis verschwenkbar gelagert und angetrieben ist.

FIG.3

## Scheibenwischer

Die Erfindung bezieht sich auf einen Scheibenwischer für Fahrzeuge, insbesondere Omnibusse mit einem Wischblattträger, der mit einem angetriebenen, am Chassis verschwenkbar gelagerten Wischerarm und einem verschwenkbaren Parallelogrammlenker gelenkig verbunden ist.

Ein derartiger Scheibenwischer ist aus der Praxis bekannt. Das eine Lager für den Parallelogrammlenker befindet sich am Ende eines Stützarmes, der steif vom Wischblattträger absteht. Das andere Lager ist als ortsfester Drehpunkt am Chassis des Fahrzeuges angeordnet, und zwar zumeist höhengleich mit dem Lager für den Wischerarm, um eine strikte Parallelführung des Wischblattträgers zu erreichen. Der bekannte Scheibenwischer wird zumeist bei Omnibussen bzw. Lkw's mit geteilter Windschutzscheibe verwendet. Legt man die am Chassis angeordneten Lager für den Wischerarm und für den Parallelogrammlenker in die Mitte der Scheibe, so wischt der Scheibenwischer beim Verschwenken ein bogenförmiges Wischfeld frei, wobei die Wischblattträger parallel zu den vertikalen Begrenzungen der Scheibe geführt werden können.

Nachteilig ist, daß der Wischblattträger in seiner Ruheposition in einem vertikalen Seitenbereich der Scheibe angeordnet ist und infolgedessen sowohl der Wischarm als auch der Parallelogrammlenker in das Sichtfeld des Fahrers hineinragen.

Für stark gewölbte Scheiben gibt es in der Praxis Schreibenwischer mit einem Wischblattträger, der starr aber lösbar mit einem angetriebenen, am Chassis verschwenkbar gelagerten Wischerarm verbunden ist. Um das Wischerfeld möglichst nahe an die Außenkante der Windschutzscheibe heranzurücken und damit auch noch den Bereich nahe an der A-Säule freizuwischen, rückt man das Lager für den Wischerarm möglichst nahe an diese A-Säule heran. Die Achse für den Wischerarm und dem damit verbundenen Antrieb kann nicht beliebig weit an die A-Säule herangeführt werden, da es sonst Schwierigkeiten mit der Gestängeverbindung zum Antriebsmotor gibt. Somit ergibt sich ein Mindestabstand zwischen der Achse des Wischerarmes und der A-Säule. Um dennoch das Wischerfeld möglichst nahe an die A-Säule heranzuführen, knickt man den Wischerarm ab. Dies hat jedoch den Nachteil, daß der Wischblattträger in seiner horizontalen Ruhelage relativ weit von der Scheibenunterkante entfernt ist und in einigen Fällen sogar in das Sichtfeld des Fahrers hineinragt.

Die Erfindung will hier Abhilfe schaffen und insbesondere einen Scheibenwischer zur Verfügung stellen, der auch für stark gewölbte Schreiben ein großes Wischerfeld bietet, ohne daß der Wischblattträger in seiner Ruheposition stört.

Diese Aufgabe wird erfindungsgemäß dadurch gelöst, daß der Lenker an einem Hebel gelagert ist, der seinerseits am Chassis verschwenkbar gelagert und angetrieben ist.

Die Lagerung des Parallelogrammlenkers an dem Hebel und der separate Antrieb hierfür bieten die Möglichkeit, trotz eines gewissen Abstandes der Wischerachsen von der A-Säule des Fahrzeuges das Wischerfeld bis nahe an diese Säule heranzurücken. Der Wischblattträger überstreicht das Wischerfeld analog wie der vorstehend beschriebene, vorbekannte Scheibenwischer mit dem abgeknickten Wischerarm. Dies bedeutet, daß er einen Kreissektor von ca. 90$^\circ$ überstreicht, wobei der Wischblattträger in seiner Ruhestellung wiederum horizontal parallel zur Schreibenunterkante ausgerichtet ist. Bei diesem Überstreichen des 90$^\circ$-Sektors kann der Wischblattträger fluchtend zu der Stellung des Hebels, des Parallelogrammlenkers und des Wischerarmes ausgerichtet sein. Um die Abstandszone zwischen den Achsen des Wischerarmes und des Hebels und der A-Säule auch zu überstreichen, wird der Wischblattträger über die vertikale 90$^\circ$-Stellung hinaus weiter bewegt, und zwar unter Ausnutzung der in der erfindungsgemäßen Lenkermechanik enthaltenen Parallelogrammlenkerwegung. Während der Hebel für den Parallelogrammlenker beispielsweise in der vertikalen 90$^\circ$-Stellung stehen bleibt, wird der Wischblattträger, angetrieben durch den Wischerarm eine gewisse Strecke weitergeführt, bis er nahe an die A-Säule des Fahrzeuges heranreicht. In diesem Bereich ist der Wischblattträger jeweils parallel ausgerichtet zu seiner Zwischenstellung in der vertikalen 90$^\circ$-Linie.

Dies bedeutet, daß der Scheibenwischer für das Überstreichen des 90$^\circ$-Wischersektors als normaler Scheibenwischer mit einem starren Wischerarm geführt werden kann, jedoch im Bereich der Abstandszone zwischen den Wischerachsen und der A-Säule des Fahrzeuges nach der Art eines Parallelogrammscheibenwischers geführt ist.

Auf diese Weise erreicht man, daß die Frontscheibe des Fahrzeuges vom erfindungsgemäßen Scheibenwischer bis nahe an die A-Säule freigewischt wird und somit der Fahrer den Blick frei hat in den durch die Frontscheibe zu betrachtenden Rückspiegel. Andererseits ist der erfindungsgemäße Scheibenwischer in seiner unteren Ruhe-und Bereitschaftsstellung so angeordnet, daß er auch im unteren Bereich der Frontscheibe das Sichtfeld für den Fahrer freigibt und dort nicht stört.

Vorteilhafte Weiterbildungen der Erfindung ergeben sich aus den Unteransprüchen.

Eine einfache Lagerung ergibt sich dann, wenn das Lager für den Hebel am Chassis konzentrisch zum Lager für den Wischerarm ist. Um auch bei dem erfindungsgemäßen Scheibenwischer den konventionellen mittigen Antrieb für zwei Scheibenwischer beibehalten zu können, ist es vorteilhaft, wenn der Wischerarm und/oder der Hebel als zweiarmige Hebel ausgebildet sind, wobei jeweils der eine Hebelarm zum Antrieb desselben als Kurbel dient und über ein Gestänge mit einem zentalen Antrieb bewegungsverbunden ist.

Der unterschiedliche Schwenkwinkel für den Wischerarm und den Hebel für den Parallelogrammlenker ist einfach dadurch zu erreichen, daß die als Kurbel ausgebildeten Hebelarme unterschiedlich lang sind. Der herkömmliche mittige Antrieb verfügt üblicherweise über einen Zwischenhebel, von dem aus Gestänge zu den Kurbeln der Wischer führen. Im vorliegenden Fall kann der Zwischenhebel über je ein separates Gestänge mit den beiden Kurbeln des Hebels bzw. des Wischerarmes verbunden werden. Durch die unterschiedliche Länge der Kurbeln wird der unterschiedliche Schwenkbereich erreicht.

Die Erfindung wird nachfolgend anhand eines Ausführungsbeispieles beschrieben.

Es zeigen:

Figur 1 einen Horizontalschnitt durch eine stark gewölbte Frontschreibe eines Omnibusses mit der Lagerung eines herkömmlichen Schreibenwischers,

Figur 2 die Vorderansicht der Scheibe von Figur 1 mit einem vorbekannten Schreibenwischer mit geknicktem Wischerarm,

Figur 3 eine schematische Vorderansicht auf den erfindungsgemäßen Scheibenwischer und

Figur 4 eine Seitenansicht auf den Scheibenwischer von Figur 3 zusammen mit der Lagerung.

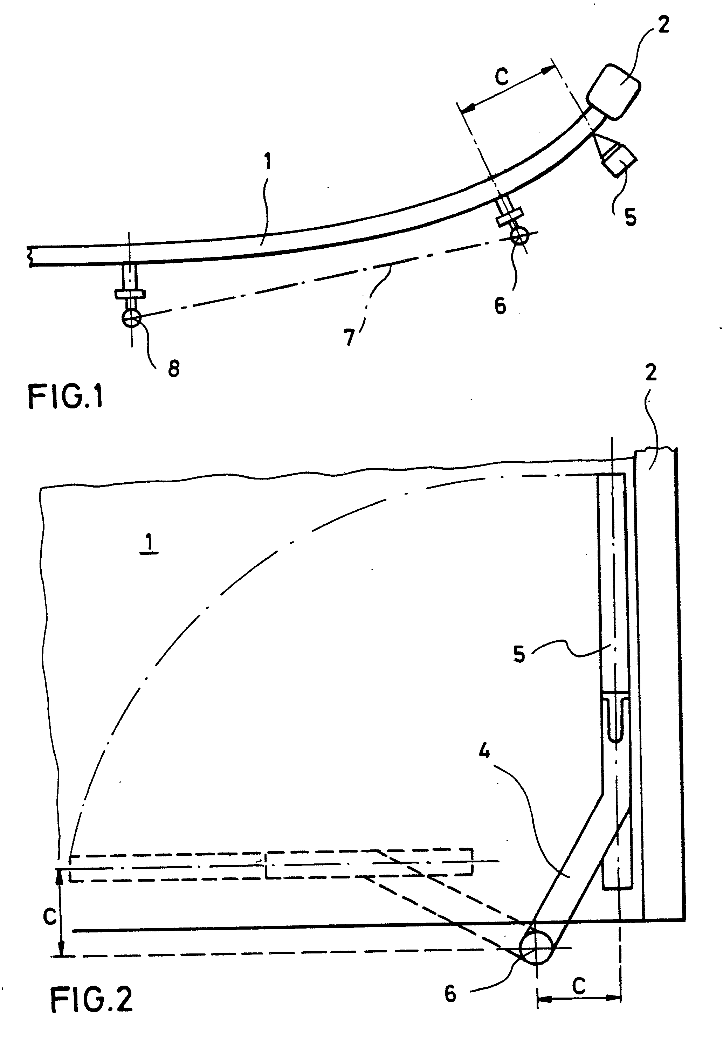

Die Figur 1 zeigt schematisch einen Teilbereich einer stark gewölbten Windschutzscheibe 1 eines Omnibusses. Die Windschutzscheibe wird beidseitig von der jeweiligen A-Säule 2 des Fahrzeugchassis begrenzt. Es besteht der Wunsch, das in Figur 2 angedeutete Wischerfeld 3 möglichst nahe an diese A-Säule heranzurücken, um dem Fahrer eine möglichst ungehinderte seitliche Sicht bis zum Rand der A-Säule hin zu ermöglichen.

Der in den Figuren 1 und 2 schematisch dargestellte vorbekannte Scheibenwischer umfaßt einen Wischerarm 4, der an seinem einen Ende lösbar, aber von seiner Orientierung her starr mit dem geknickten Wischerarm 4 verbunden ist. Am anderen Ende ist der Wischerarm in einem Lager 6 am Chassis des Fahrzeuges verschwenkbar gelagert. Im Fahrzeuginneren verfügt der Wischerarm über eine nicht näher dargestellte Kurbel, die über ein in Figur 1 skizziertes Gestänge 7 mit einem im wesentlichen in der Scheibenmitte angeordneten Zwischenhebel 8 verbunden ist. Letzterer wird über einen zentralen Antrieb über einen gewissen Schwenkbereich hin und her bewegt, um damit die Scheibenwischer über das Wischerfeld 3 zu führen.

Das Abknicken des Wischerarmes 4 hat den Zweck, die Abstandszone c zwischen dem Lager 6 des Wischerarmes und der A-Säule 2 zu überdecken. Durch diesen Knick ist es möglich, den Wischblattträger möglichst nahe und im wesentlichen parallel zur A-Säule heranzuführen. Notgedrungenerweise bleibt der Abstand c aber auch bei der in Figur 2 angedeuteten Ruhestellung des vorbekannten Scheibenwischers erhalten. In diesem Fall macht sich die Abknickung des Wischerarmes nachteilig bemerkbar, da der Wischblattträger um den Versatz c in die Scheibe hineinragt.

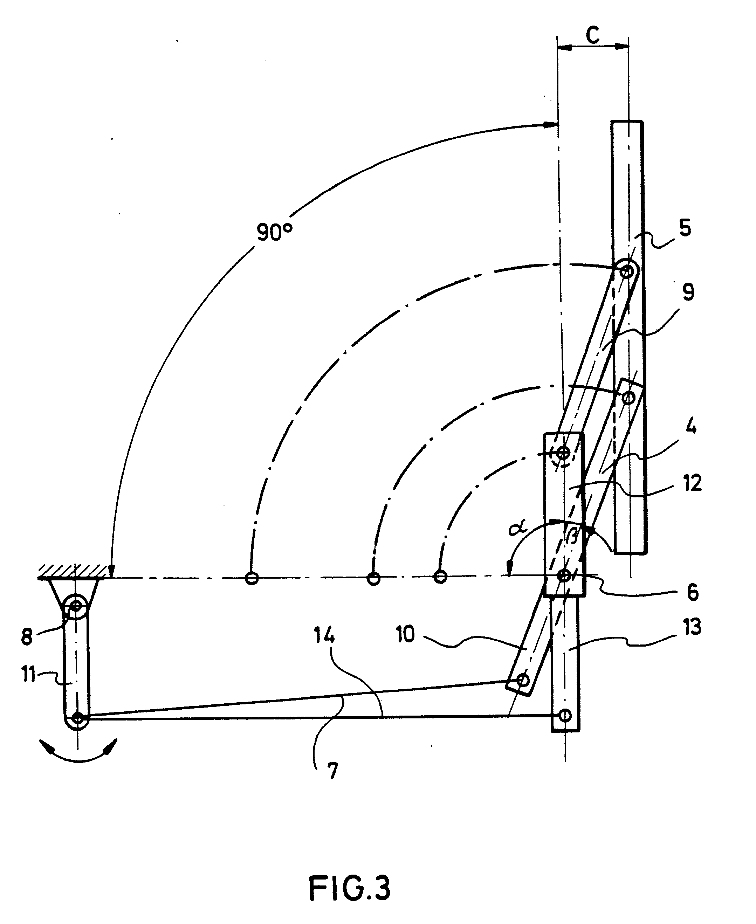

Die Figur 3 zeigt die erfindungsgemäße Lösung. Für gleiche Teile werden gleiche Bezugsziffern wie bei dem Scheibenwischer bei den Figuren 1 und 2 verwendet.

Der Scheibenwischer umfaßt einen Wischblattträger 5, der von einem Wischerarm 4 und einem Parallelogrammlenker 9 getragen ist. Beide sind am Wischblattträger 5 verschwenkbar gelagert. Der Wischerarm 4 ist zweiarmig ausgebildet. Zwischen seinen beiden Enden ist er in einem Lager 6 am Chassis des Fahrzeuges verschwenkbar gelagert. Während der eine, den Wischblattträger 4 tragende Hebelarm sichtbar ist, kann der andere hinter der Blechverkleidung des Fahrzeuges angeordnet sein. Er dient als Kurbel 10 und ist über ein Gestänge 7 mit dem bereits angesprochenen Zwischenhebel 11 bewegungsverbunden.

Der Parallelogrammlenker 9 ist an seinem unteren Ende verschwenkbar an einem Hebel 12 gelagert, der im vorliegenden Fall parallel zum Wischblattträger 5 ausgerichtet ist. Der Hebel ist analog zum Wischerarm 4 zweiarmig ausgebildet, im Lager 6 verschwenkbar gelagert und setzt sich vorzugsweise hinter der Blechverkleidung in Form einer als Kurbel 13 dienenden Hebelarm fort. Er ist über ein Gestänge 14 mit dem Zwischenhebel 11 bewegungsverbunden.

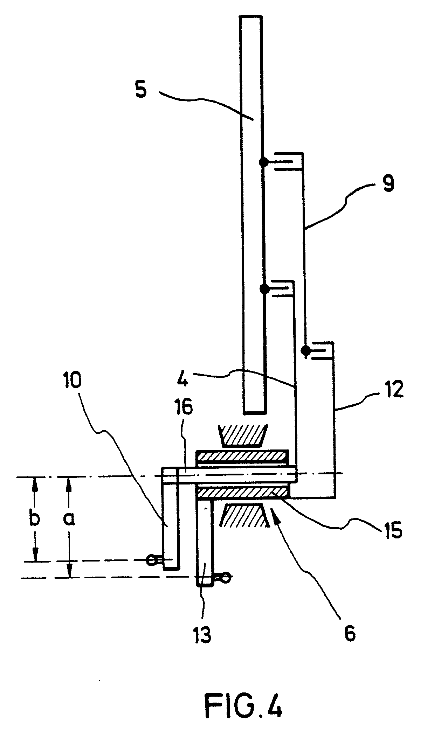

Die näheren Details des erfindungsgemäßen Scheibenwischers gehen auch aus Figur 4 hervor. Daraus ist zu ersehen, daß der Wischerarm 4 und der Hebel 12 konzentrisch zueinander im Lager 6 verschwenkbar gehalten sind. Der Wischerarm 4 bildet innerhalb des Lagers eine Zentralwelle 16, die von einer Hohlwelle 15 des Hebels 12 umgeben ist.

Die unterschiedliche Länge der Kurbeln 10 und 13 ergibt sich aus dem Wunsch, daß der Hebel 12

lediglich den Winkelbereich $\alpha$ ,wohingegen der Wischerarm 4 den Winkelbereich $\alpha + \beta$ überstreichen soll. Durch das zusätzliche Überstreichen des Winkelbereiches $\beta$ durch den Wischerarm 4 wird der Wischblattträger über den in Figur 3 eingezeichneten 90°-Kreissektor hinausgeführt und überstreicht im Rahmen einer Parallelverschiebung die Abstandszone c.

Die Länge a und b der Kurbeln 10 und 13 bestimmen die Schwenkbereiche $\alpha$ und $\beta$ . Mit dem Hebelverhältnis

$\frac{a}{b} \cong \frac{\alpha}{\alpha + \beta}$ läßt sich die gewünschte Differenz in der Schwenkbewegung zwischen dem Hebel 12 und dem Wischerarm 4 auf einfache Weise verwirklichen.

Der von einem zentralen Antrieb, z.B. einem Motor hin- und bewegte Zwischenhebel 11 versetzt über die Gestänge 7 und 14 die Kurbeln 10 und 13 in Schwenkbewegungen. Damit wird die vom Zwischenhebel 11 ausgehende gleichgroße Translationsbewegung in unterschiedliche Schwenkbewegungen der Kurbeln 10 und 13 und damit auch in unterschiedliche Schwenkbewegungen des Wischerarms 4 und des Hebels 12 umgesetzt. Um die Scheibenwischerkinematik und die Schwenkbereiche $\alpha$ und $\alpha + \beta$ nach Wunsch justieren zu können, ist es vorteilhaft, wenn die Kurbeln 10 und 13 in ihrer Länge über einen gewissen Bereich einstellbar sind. Dies kann z.B. durch Gewindespindeln oder Schiebestücke realisiert werden.

Eine ebensolche Längenveränderlichkeit kann auch für die Gestänge 7 und 14 vorgesehen werden, um die Endstellungen der Kurbeln 10 und 13 bzw. des Wischerarmes 4 und des Hebels 12 auf Wunsch abändern zu können.

Der erfindungsgemäße Scheibenwischer hat mehrere Vorteile. Der Scheibenwischer kann in seiner nicht dargestellten Ruhestellung gestreckt ausgerichtet werden. In der anderen, nahe der A-Säule befindlichen Endlage wird er durch die Parallelogrammführung über die Abstandszone c hinwegbewegt. Das Lager 6 für den Wischerarm 7 und den Hebel 12 kann unterhalb der Scheibe in einer Entfernung c von der A-Säule angeordnet sein, die die beste Kinematik für die Verbindung mit dem Zwischenhebel 11 ergibt.

## Ansprüche

1. Scheibenwischer für Fahrzeuge, insbesondere Omnibusse mit einem Wischblattträger, der mit einem angetriebenen, am Chassis verschwenkbar gelagerten Wischerarm und einem verschwenkbaren Parallelogrammlenker gelenkig verbundenist, **dadurch gekennzeichnet,** daß der Lenker (9) an einem Hebel (12) gelagert ist, der am Chassis verschwenkbar gelagert und angetrieben ist.

2. Scheibenwischer nach Anspruch 1, **dadurch gekennzeichnet,** daß der Hebel (12) parallel zum Wischblattträger (5) ausgerichtet ist.

3. Scheibenwischer nach Anspruch 1 oder 2, **dadurch gekennzeichnet,** daß das Lager (6) für den Hebel (12) am Chassis konzentrisch zum Lager (6) für den Wischerarm (4) ist.

4. Scheibenwischer nach einem der vorhergehenden Ansprüche, **dadurch gekennzeichnet,** daß der Wischerarm (4) und/oder der Hebel (12) als zweiarmige Hebel ausgebildet sind, wobei jeweils der eine Hebelarm (10, 13) für den Antrieb desselben als Kurbel dient und über ein Gestänge (7, 14) mit einem zentralen Antriebe (11) bewegungsverbunden ist.

5. Scheibenwischer nach einem der vorhergehenden Ansprüche, **dadurch gekennzeichnet,** daß die als Kurbel ausgebildeten Hebelarme (10, 13) zum Erreichen eines unterschiedlichen Schwenkwinkels unterschiedlich lang (a, b) sind.

6. Scheibenwischer nach einem der vorhergehenden Ansprüche, **dadurch gekennzeichnet,** daß der Hebel (12) über eine Hohlwelle (15) mit der Kurbel (13) verbunden und im Lager (6) gelagert ist.

7. Scheibenwischer nach einem der vorhergehenden Ansprüche, **dadurch gekennzeichnet,** daß der Wischerarm (4) mit Hilfe einer durch die Hohlwelle (15) geführten Welle (16) mit der Kurbel (10) verbunden und somit auch im Lager (6) drehbar gelagert ist.

8. Scheibenwischer nach einem der vorhergehenden Ansprüche, **dadurch gekennzeichnet,** daß der Wischerarm (4) einen größeren Winkel ($\alpha + \beta$) überstreicht, als der Hebel (12), dem ein Wischbereich ($\alpha$) zugeordnet ist.

9. Scheibenwischer nach einem der vorhergehenden Ansprüche, **dadurch gekennzeichnet,** daß die unterschiedlichen Schwenkbereiche des Wischarms (4) und des Hebels (12) durch die Hebelarmverhältnisse der entsprechenden Kurbeln (10) und (13) nach der folgenden Formel bestimmt sind:

$$\frac{\text{a (Länge der Kurbel 10)}}{\text{b (Länge der Kurbel 13)}} \cong \frac{\alpha}{\alpha + \beta}$$

10. Scheibenwischer nach Anspruch 4, **dadurch gekennzeichnet**, daß der zentrale Antrieb einen drehbar gelagerten Zwischenhebel (11) aufweist, dessen hin- und hergehende Translationsbewegung über das Gestänge (7, 14) in unterschiedliche Winkelausschläge der Kurbel (10, 13) umsetzbar ist.

11. Scheibenwischer nach einem der vorhergehenden Ansprüche, **dadurch gekennzeichnet**, daß die Kurbeln (10, 13) für die Justierbarkeit der Scheibenwischerkinematik in ihrer Länge einstellbar sind.

FIG.1

FIG.2

**FIG.3**

FIG.4